# EUROPÄISCHE PATENTSCHRIFT

(11) **EP 0 788 591 B1**
(45) Veröffentlichungstag und Bekanntmachung des Hinweises auf die Patenterteilung: **31.03.1999**
(21) Anmeldenummer: 95933286.7
(22) Anmeldetag: 12.10.1995
(51) Int. Cl.: F17C 13/00, F17C 13/08, F16L 37/084, F16L 37/12

(54) **ANSCHLUSSSYSTEM FÜR EINE DRUCKGASFLASCHE**
CONNECTING SYSTEM FOR A PRESSURISED GAS BOTTLE
SYSTEME DE RACCORDEMENT POUR BOUTEILLE A GAZ COMPRIME

(30) Priorität: 14.10.1994 CH 3088/94; 24.11.1994 CH 3547/94
(43) Veröffentlichungstag der Anmeldung: 13.08.1997
(73) Patentinhaber: CARBAGAS, 3097 Liebefeld (CH)
(72) Erfinder: BERNHARD, Ernst, CH-2558 Aegerten (CH)
(74) Vertreter: Hug Interlizenz AG
(86) Internationale Anmeldenummer: CH9500234
(87) Internationale Veröffentlichungsnummer: WO9612137

(56) Entgegenhaltungen:
- CA-A- 974 556
- FR-A- 2 410 210
- US-A- 2 309 869
- US-A- 4 795 202
- US-A- 5 080 414

## Beschreibung

### TECHNISCHES GEBIET

Die vorliegende Erfindung bezieht sich auf das Gebiet der Druckgastechnik. Sie betrifft ein für eine Druckgasflasche, umfassend ein in einem Flaschenhals der Druckgasflasche angeordnetes Rückschlagventil, welches mit einer Anschlussöffnung zur Gasentnahme ausgestattet ist und mittels eines entlang einer Mittelachse verschiebbaren Ventilstössels von aussen betätigbar ist, sowie eine Anschlussvorrichtung, welche mit dem Rückschlagventil lösbar einrastend und gasdicht verbindbar ist und Mittel zur Betätigung des Ventilstössels enthält.

Ein solches Anschlusssystem ist z.B. aus der Druckschrift EP-A2-0 108 972 bekannt.

### STAND DER TECHNIK

Heute werden in vielen Bereichen die verschiedensten Gase verwendet, jedoch ist für das Auswechseln entleerter Flaschen nicht immer handwerklich ausgebildetes Personal zur Stelle. Als Beispiel sei hier die Gentränkeaufbereitung in der Gastronomie oder die Versorgung von Patienten im medizinischen Bereich mit lebensnotwendigen oder sonstwie wichtigen Gasen (Sauerstoff, Lachgas etc.) erwähnt. Besonders in der Medizin kann die Gesundheit und sogar das Leben davon abhängen, ob in kurzer Zeit die richtige Gasflasche angeschlossen wird.

Das heute gebräuchliche Anschlusssystem besteht in diesen Bereichen aus einem Hahnen mit Anschlussgewinde für ein Druckreduzierventil oder eine Gasleitung. Der Hahnen arbeitet über eine Spindel und Ventilglocke mit Dichtung gegen den Druck in der Flasche. Die Anschlussgewinde sind genormt. Ihre Vielfalt ist jedoch begrenzt, so dass nur unzureichende Möglichkeiten bestehen, eine Kodierung der Anschlusssysteme nach unterschiedlichen Gasarten vorzunehmen. Weiterhin muss üblicherweise eine Ueberwurfmutter angezogen werden, wozu in fast allen Fällen ein grosser Schlüssel benötigt wird. Eine weitere Erschwernis ist, dass es Links- und Rechtsgewinde gibt, die beim Anschliessen der Flasche unter Zeitverlust erst identifiziert werden müssen. Schliesslich ist bei nicht mehr leichtgängiger Spindel ein erheblicher Kraftaufwand zum Oeffnen des Hahnen erforderlich.

In der eingangs genannten Druckschrift ist nun bereits ein Anschlusssystem vorgeschlagen worden, welches insbesondere für brennbare Flüssiggase geeignet ist. Bei diesem bekannten System ist die Druckgasflasche mit einem als Rückschlagventil ausgebildeten Gasflaschenventil ausgerüstet, auf welches dichtend und einrastbar ein Regelventil aufgesteckt werden kann. Ein im Regelventil sitzender Steuerstift betätigt beim Aufstecken das Rückschlagventil, so dass sich insgesamt ein schneller Anschluss ergibt.

Das bekannte Anschlusssystem hat jedoch verschiedene Nachteile:
- Eine spezielle Kodierung des Anschlusses ist nicht vorgesehen und kann auch nicht ohne weiteres ergänzt werden.
- Der Anschlussvorgang selbst muss wegen der mangelnden Führung zwischen Aufsteckventil und Gasflaschenventil vergleichsweise sorgfältig durchgeführt werden, damit das Regelventil auf dem Gasflaschenventil richtig sitzt.
- Das Aufstecken des Regelventils erfordert einen vergleichsweise hohen Kraftaufwand.
- Das System ist vor allem für fest stehende Druckgasflaschen geeignet, auf die das Regelventil aufgesteckt wird. Eine sichere Halterung der Flaschen ist damit nicht verbunden, was gerade bei den in der Medizin und Gastronomie gebräuchlichen kleinen Druckgasflaschen zu Problemen führen kann.
- Das an der Flasche fest installierte Rückschlagventil sitzt oberhalb des Einschraubgewindes. Wird z.B. beim Umfallen der Flasche das Gasflaschenventil abgeschert, entweicht der Flascheninhalt ungehindert, was zu erheblichen Sicherheitsrisiken führen kann.

### DARSTELLUNG DER ERFINDUNG

Es ist daher Aufgabe der Erfindung, ein Anschlusssystem für Druckgasflaschen zu schaffen, welches ein leichtes und schnelles Auswechseln bzw. Anschliessen der Flaschen ermöglicht, eine hohe Sicherheit gegen Fehlbedienung und Störfälle gewährleistet, die sichere Handhabung und Aufbewahrung der Flaschen ermöglicht, und vielfältige Kodierungsmöglichkeiten zur Verfügung stellt.

Die Aufgabe wird bei einem Anschlusssystem der eingangs genannten Art dadurch gelöst, dass die Druckgasflasche mit dem Rückschlagventil und die Anschlussvorrichtung in einer gemeinsamen, quer zur Mittelachse und ausserhalb der Mittelachse angeordneten Schwenkachse mechanisch verkoppelbar und im verkoppelten Zustand durch ein Verschwenken relativ zueinander um die Schwenkachse verbindbar sind.

Durch die mechanische Verkopplung von Anschlussvorrichtung und Rückschlagventil in einer Schwenkachse wird zunächst eine feste Zuordnung zwischen den beiden Teilen des Systems erreicht, so dass beim nachfolgenden Verschwenken der verschwenkte Teil sicher geführt ist. Aufgrund der festliegenden Schwenkachse ist ein Verdrehen der beiden Teile gegeneinander um die Mittelachse nicht möglich, wodurch sich eine Vielzahl von Kodierungsmöglichkeiten ergeben. Wird insbesondere bei einer ortsfesten Anschlussvorrichtung die Schwenkbewegung von der Druckgasflasche ausgeführt, kann der Schwung der (schweren) Flasche ausgenutzt werden, um den gasdichten Anschluss mit geringem Kraftaufwand zu bewerkstelligen.

Eine erste bevorzugte Ausführungsform des erfindungsgemässen Anschlusssystems zeichnet sich dadurch aus, dass das Rückschlagventil einen zur Mittelachse konzentrischen Einschraubkonus umfasst und mittels eines auf dem Einschraubkonus angeordneten konischen Gewindes in den Flaschenhals der Druckgasflasche einschraubbar ist, dass am äusseren Ende des Einschraubkonus eine im wesentlichen rechteckige, quer zur Mittelachse liegende Anschlussplatte angeformt ist, auf deren Oberseite die Anschlussöffnung eingelassen ist, dass die Schwenkachse durch ein Paar Zapfen bestimmt wird, welche an zwei gegenüberliegenden Seiten der Anschlussplatte angeformt sind, und dass an der Anschlussplatte zwei Paare von Zapfen angeformt sind, welche zwei wahlweise benutzbare Schwenkachsen bestimmen, die symmetrisch zu einer durch die Mittelachse gehenden Mittelebene angeordnet sind.

Mit Hilfe des einen Zapfenpaares kann die mit dem Rückschlagventil versehene Druckgasflasche leicht in eine ortsfeste Halterung eingehängt und im eingehängten Zustand verschwenkt werden. Das andere Zapfenpaar eignet sich dann im verschwenkten Zustand besonders gut zum Führen und Verrasten der Verbindung. Die symmetrische Anordnung der Zapfenpaare gewährleistet, dass die Flasche auch bei einer Drehung um 180° um die Mittelachse problemlos angeschlossen werden kann, weil die beiden Zapfenpaare dann ihre Funktion einfach vertauschen.

Eine zweite bevorzugte Ausführungsform des erfindungsgemässen Anschlusssystems ist dadurch gekennzeichnet, dass die Anschlussöffnung als sich nach aussen öffnender, zur Mittelachse konzentrischer Konus ausgebildet ist, dass in der Wand des Oeffnungskonus ein konzentrisch umlaufender Dichtungsring eingelassen ist, und dass die Anschlussvorrichtung einen Gasentnahmekopf umfasst, welcher in seinem vorderen Bereich als zum Oeffnungskonus passender und beim Verbinden von Rückschlagventil und Anschlussvorrichtung dichtend in den Oeffnungskonus einsitzender Steckkonus ausgebildet ist.

Hierdurch wird ermöglicht, dass beim Verschwenken der beiden Anlagenteile (Anschlussvorrichtung und Rückschlagventil) relativ zueinander bereits eine Abdichtung nach aussen erfolgt, bevor die Endlage der Verschwenkung erreicht ist. Auf diese Weise wird eine Gasabgabe nach aussen während des Anschlussvorganges sicher vermieden, auch wenn das Rückschlagventil beim Verbinden durch die Mittel zum Betätigen des Ventilstössels automatisch geöffnet wird.

Eine weitere bevorzugte Ausführungsform der Erfindung zeichnet sich dadurch aus, dass am Rückschlagventil und an der Anschlussvorrichtung Kodierungsmittel angeordnet sind, welche ein ordnungsgemässes Verbinden von Druckgasflasche und Anschlussvorrichtung nur für zur Anschlussvorrichtung passende Druckgasflaschen zulassen, und dass die Kodierungsmittel eine konzentrisch zur Mittelachse im Bereich der Anschlussöffnung angeordnete, konkav verzahnte Innenform und eine dazu passende, im Bereich des Gasentnahmekopfes angeordnete konvex verzahnte Aussenform umfassen. Wegen der drehfesten Zuordnung zwischen dem Rückschlagventil und der Anschlussvorrichtung nach erfolgter mechanischer Ankopplung wird durch diese Art der Kodierung eine grosse Vielzahl von Kodierungsmöglichkeiten geschaffen.

Eine weitere, besonders bevorzugte Ausführungsform ist dadurch gekennzeichnet, dass die Anschlussvorrichtung ein Reduzierventil mit einer federbelasteten Membran umfasst, dass die Mittel zur Betätigung des Ventilstössels eine von der Membran beaufschlagte Stossstange umfassen, welche beim Verbinden von Rückschlagventil und Anschlussvorrichtung auf den Ventilstössel einwirkt, dass die Anschlussvorrichtung eine fest montierbare Wandhalterung zur Aufnahme der mit dem Rückschlagventil ausgerüsteten Druckgasflasche umfasst, an welcher das Reduzierventil zurückfedernd befestigt ist, dass das Rückschlagventil einen zur Mittelachse konzentrischen Einschraubkonus umfasst und mittels eines auf dem Einschraubkonus angeordneten konischen Gewindes in den Flaschenhals der Druckgasflasche einschraubbar ist, dass am äusseren Ende des Einschraubkonus eine im wesentlichen rechteckige, quer zur Mittelachse liegende Anschlussplatte angeformt ist, auf deren Oberseite die Anschlussöffnung eingelassen ist, dass die Schwenkachse durch ein Paar Zapfen bestimmt wird, welche an zwei gegenüberliegenden Seiten der Anschlussplatte angeformt sind, dass die Wandhalterung zwei parallele Tragarme umfasst, welche an ihrem freien Ende Einhängeöffnungen aufweisen, in welche Einhängeöffnungen die Anschlussplatte mit ihren Zapfen einhängbar ist, und in welchen Einhängeöffnungen die Anschlussplatte um die durch die Zapfen bestimmte Schwenkachse verschwenkbar ist.

Bei dieser Ausführungsform wird die Flasche in die Einhängeöffnungen eingehängt und dort bereits vor dem endgültigen Anschluss sicher gehaltert. Durch ein leichtes Verschwenken, welches durch das Gewicht der Flasche begünstigt wird, kann dann sicher und ohne Schwierigkeiten der Anschluss hergestellt werden, wobei die Oeffnung des Rückschlagventils automatisch durch die von dem Reduzierventil beaufschlagte Stossstange erfolgt. Ebenso kann beim Austausch von Flaschen umgekehrt die Verbindung durch Zurückschwenken zunächst gelöst werden ohne das die (noch in den Tragarmen hängende) Flasche selbst gehalten werden muss.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1-4: verschiedene bevorzugte Ausführungsbeispiele für ein Anschlusssystem nach der Erfindung mit Reduzierventil und Handbetätigungsvorrichtung bzw. fest montierter Wandhalterung und mobiler Halterung;
- Fig. 5: in verschiedenen Ansichten die äussere Gestalt (a, b) und den inneren Aufbau (c) des einschraubbaren Rückschlagventils aus den Fig. 1-4;
- Fig. 6: den beispielhaften Aufbau des Reduzierventils aus Fig. 1 und 2 mit dem eingeschraubten Gasentnahmekopf;
- Fig. 7: das Rückschlagventil aus Fig. 5 im zusammengebauten Zustand vor der Verbindung mit dem Reduzierventil aus Fig. 6;
- Fig. 8: den Gasentnahmekopf aus Fig. 6 mit den Kodierungselementen in der Draufsicht von unten;
- Fig. 9: verschiedene Phasen beim Verbinden des Anschlusssystems nach Fig. 1 (von aussen gesehen); und
- Fig. 10: verschiedene Phasen beim Verbinden des Anschlusssystems nach Fig. 1 in der Schnittdarstellung.

### WEGE ZUR AUSFÜHRUNG DER ERFINDUNG

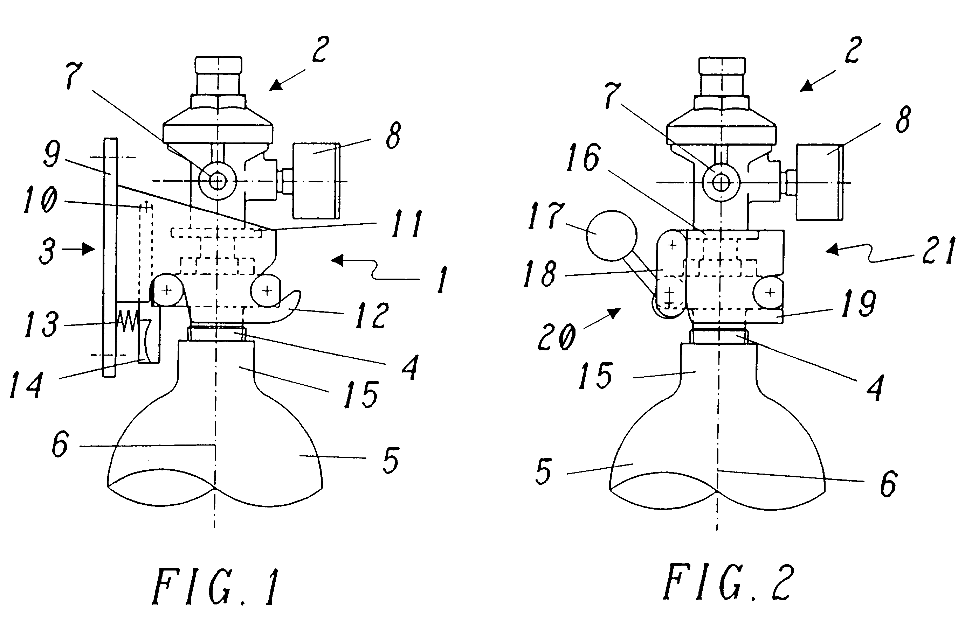

Das Anschlusssystem nach der Erfindung lässt sich grundsätzlich in den unterschiedlichsten Funktionen bzw. Varianten mit Vorteil einsetzen, wobei auf der Flaschenseite immer dieselben Anschlussteile verwendet werden können. Vier mögliche Varianten sind beispielhaft in den Fig. 1 bis 4 wiedergegeben.

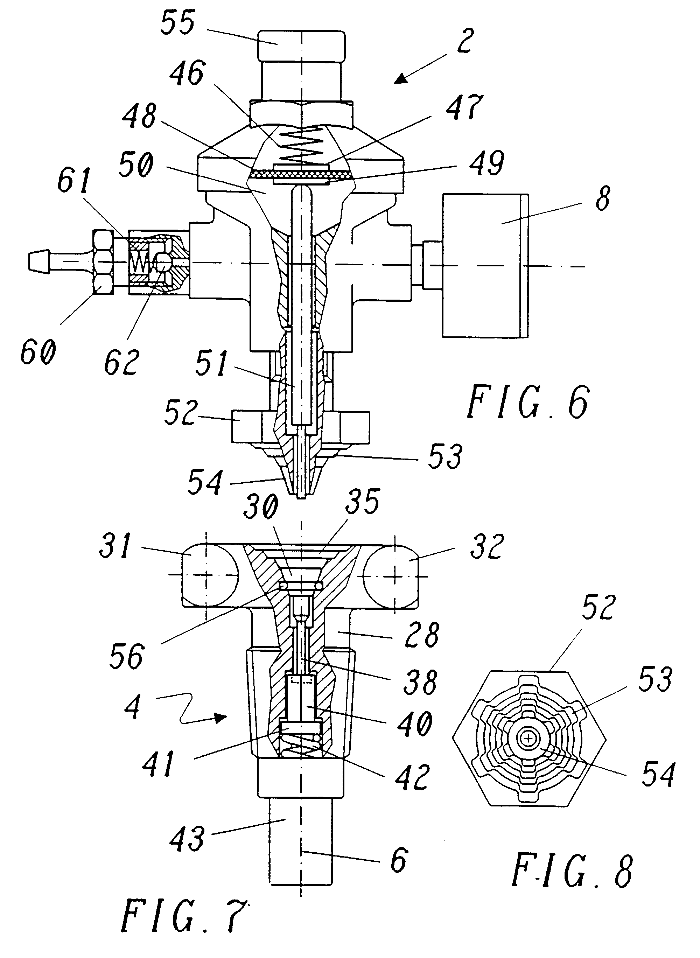

In den Fig. 1 und 2 ist ein Anschlusssystem 1 bzw. 21 mit vorgesteuertem Druckanschluss dargestellt, welches vor allem für Flüssiggase, bei denen der Flaschendruck nichts oder nur wenig über den Restinhalt aussagt, oder für hochkomprimierte Gase, bei denen keine Anzeige des Restdruckes verlangt wird, geeignet ist. Die Druckgasflasche 5 umfasst ein in den Flaschenhals 15 eingeschraubtes Rückschlagventil 4, welches beim Anschliessen mit einem Reduzierventil 2 verbunden wird. Eine im Reduzierventil 2 befindliche Feder (46 in Fig. 6) öffnet beim Anschliessen über eine Stossstange (51 in Fig. 6) das Rückschlagventil 4. Wenn der eingestellte Druck erreicht ist, wird durch die Membran (48 in Fig. 6) die Feder 46 zusammengedrückt, wodurch sich die Stossstange 51 zurückbewegt und das Rückschlagventil wieder schliesst. Am Reduzierventil 2 können weiterhin ein Manometer 8 und ein Ueberdruckventil 7 vorgesehen sein. Der Anschluss erfolgt in einer Mittelachse 6.

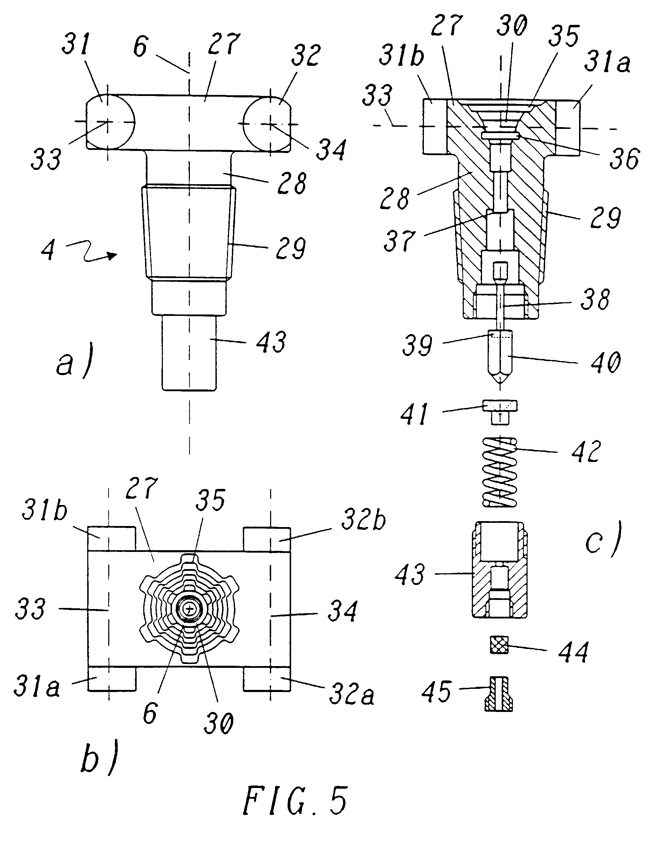

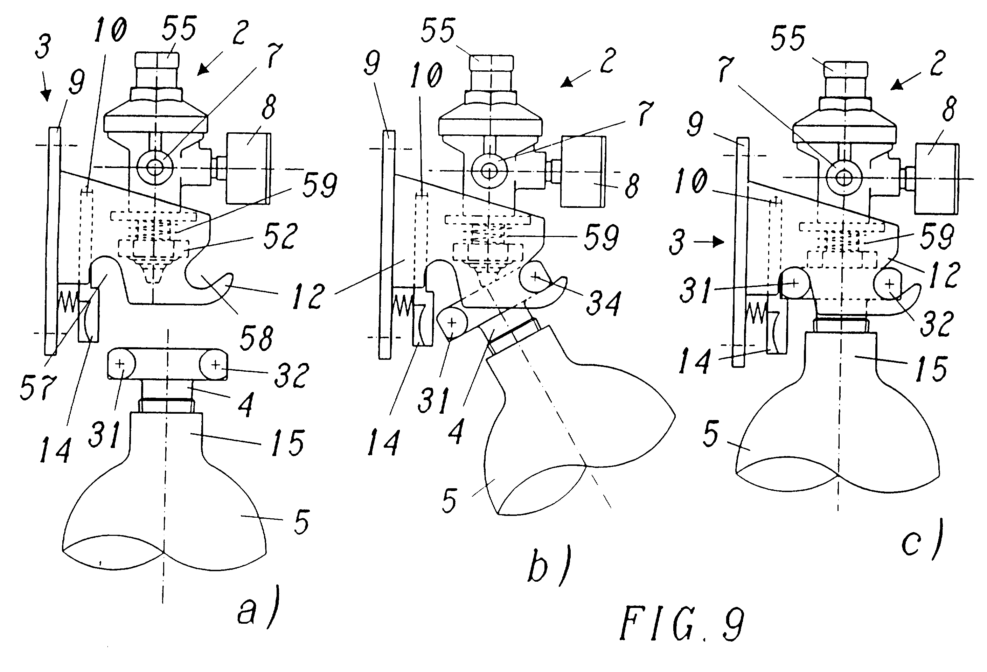

Für kleinere Druckgasflaschen 5 ist gemäss Fig. 1 eine Wandhalterung 3 vorgesehen, welche mittels einer Befestigungsplatte 9 an der Wand oder direkt in einem Gerät festgeschraubt werden kann. An der Befestigungsplatte 9 sind zwei parallele, plattenförmige Tragarme 12 angebracht (in Fig. 1 ist nur der vordere Tragarm zu sehen), die durch eine quer dazwischenliegende Tragplatte 11 miteinander verbunden sind. Auf der Tragplatte 11 ist zurückfedernd das Reduzierventil 2 mit seinem untenliegenden, hier nicht näher bezeichneten Gasentnahmekopf (52 in Fig. 6) befestigt. Die Tragarme 12 weisen Einhängeöffnungen (58 in Fig. 9(a)) und Einrastöffnungen (57 in Fig. 9(a)) auf, in welche die Druckgasflasche 5 mit am Rückschlagventil 4 oben angeformten Zapfen (31a,b; 32a,b in Fig. 5(b)) eingehängt und durch leichten Druck zur Wand hin eingeklinkt bzw. eingerastet werden kann. In der Einraststellung wird die Flasche durch einen Klinkenhebel 14 gesichert, der an den Tragarmen 12 um eine Schwenkachse 10 schwenkbar gelagert ist und mittels einer Feder 13 vorgespannt wird. Die leere Druckgasflasche 5 wird durch leichten Druck gegen den Klinkenhebel 14 freigegeben. Dabei bleibt sie im eingehängten Zustand und ist so gegen ein Herunterfallen gesichert. Im eingeklinkten bzw. eingerasteten Zustand bedarf die Flasche keiner weiteren Sicherung (durch Ketten oder dgl.), wie sie bei den herkömmlichen Anschlusssystemen notwendig ist.

Der mobile Anschluss gemäss Fig. 2 ist vorwiegend für grosse Druckgasflaschen vorgesehen. Er umfasst eine mobile Halterung 20 mit zwei parallelen Gabeln 19, zwischen denen ebenfalls eine Tragplatte 16 zur Befestigung des Reduzierventils 2 angeordnet ist. Die Halterung 20 wird beim Anschliessen mit den Gabeln 19 schräg über die beiden rechten Zapfen (32a,b in Fig. 5(b)) am Rückschlagventil 4 eingehängt und nach unten eingeklinkt. Das einrasten erfolgt auch hier an den beiden anderen Zapfen (31a,b in Fig. Fig. 5(b)), und zwar mittels eines Kniehebelsystems, welches einen Betätigungshebel 17 und einen Rasthebel 18 umfasst.

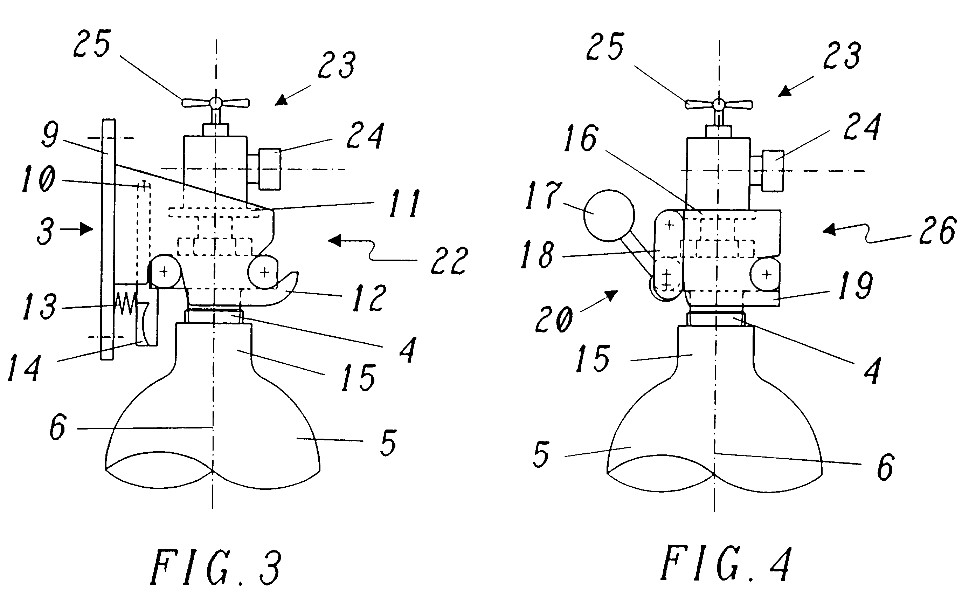

In den Fig. 3 und 4 ist ein Anschlusssystem nach der Erfindung mit direktem Druckanschluss dargestellt, welches vor allem für hochkomprimierte Gase mit Restdruckanzeige bzw. für Leitungsanschlüsse mit unvermindertem Druck eingesetzt werden kann. Anstelle eines Reduzierventils ist hier eine Handbetätigungsvorrichtung 23 vorgesehen, mittels derer das Rückschlagventil 4 über eine Spindel 25 oder eine Stossstange geöffnet werden kann. An der Handbetätigungsvorrichtung 23 ist ein Anschluss 24 zur Gasentnahme angeordnet, an den auch ein herkömmliches Druckreduzierventil angebaut werden kann. Wie bei den Ausführungsbeispielen aus Fig. 1 und 2 kann auch hier wahlweise die Wandhalterung 3 (Fig. 3) oder die mobile Halterung 20 (Fig. 4) Verwendung finden.

Aeussere Gestalt und innerer Aufbau des in die Druckgasflasche 5 einschraubbaren Rückschlagventils 4 sind in Fig. 5 wiedergegeben, wobei die Teilfiguren (a) und (b) die Seitenansicht bzw. die Draufsicht, und die Teilfigur (c) in einer Explosionsdarstellung den Längsschnitt zeigen. Das Rückschlagventil 4 besteht aus einem Einschraubkonus 28 mit einem aussen angebrachten konischen Gewinde 29, welches an die jeweiligen Innengewinde im Flaschenhals 15 der Druckgasflasche 5 angepasst ist. Am oberen Ende des Einschraubkonus 28 ist eine im wesentlichen rechteckige, quer zur Mittelachse 6 liegende Anschlussplatte 27 angeformt.

Auf der Oberseite der Anschlussplatte 27 ist eine Anschlussöffnung 30 eingelassen, die als sich nach aussen öffnender, zur Mittelachse 6 konzentrischer Konus ausgebildet ist. In der Wand des Oeffnungskonus ist eine konzentrisch umlaufende Dichtungsnut 36 eingelassen, die einen O-Ring (56 in Fig. 7) als Dichtung aufnimmt. Als Kodierungsmittel ist eine konzentrisch zur Mittelachse 6 im Bereich der Anschlussöffnung 30 angeordnete, konkav verzahnte Innenform 35 vorgesehen, die beim Anschliessen der Druckgasflasche 5 mit einer dazu passenden, im Bereich des Gasentnahmekopfes 52 angeordneten, konvex verzahnten Aussenform 53 (Fig. 6, 8) in Eingriff kommt. Die Verzahnung von Innenform 35 und Aussenform 53 erstreckt sich auf drei Ebenen, die sich auf unterschiedlicher Höhe befinden. Da die Verzahnung auf jeder Ebene unabhängig von den anderen Ebenen gestaltet werden kann, ergibt sich kombinatorisch eine Vielzahl von Kodierungsmöglichkeiten.

An der Anschlussplatte 27 sind zwei Paare von Zapfen 31, 32 bzw. 31a,b; 32a,b angeformt, welche als Drehzapfen ausgebildet sind und zwei wahlweise benutzbare Schwenkachsen 33, 34 bestimmen, die symmetrisch zu einer durch die Mittelachse 6 gehenden Mittelebene angeordnet sind. Jede der Schwenkachsen 33, 34 kann gleichwertig verwendet werden, um die Druckgasflasche 5 in eine Halterung gemäss Fig. 1 bzw. 3 einzuhängen und beim Anschlussvorgang um diese Achse zu verschwenken, da das Rückschlagventil 4 einschliesslich der Kodierungsmittel 35 gegen eine Rotation um 180° invariant ist. Hierdurch wird der Anschluss der Druckgasflasche 5 wesentlich erleichtert.

Das eigentliche Ventil im Inneren des Rückschlagventils 4 wird durch einen Ventilsitz 37 gebildet, der von einer Ventildichtung 39 verschlossen werden kann (Fig. 5(c)). Die Ventildichtung 39 ist in die Oberseite eines Ventilkörpers 40 eingelassen, der vorzugsweise einen rechteckigen Querschnitt aufweist, um bei gleichzeitiger seitlicher Führung einen ungehinderten Gasdurchtritt zu gewährleisten. Der Ventilkörper 40 geht oben in einen Ventilstössel 38 über, der eine Betätigung des Ventils von der Anschlussöffnung 30 her ermöglicht. Der Ventilstössel 38 ist gehärtet und reicht von oben in den Bereich des konischen Gewindes 29 hinein. Hierdurch wird erreicht, dass bei einem unfallbedingten Abscheren des Rückschlagventils 4 am Flaschenhals 15 der Ventilstössel 38 abgerissen wird, ohne dass die Dichtfunktion des Ventils 37, 39, 40 verloren geht.

Der Ventilkörper ist über ein Adapterstück 41 mit dem Druck einer Feder 42 beaufschlagt, die sich im Sackloch eines von unten eingeschraubten Filtergehäuses 43 abstützt. Im Filtergehäuse 43 ist vorzugsweise eine Filterpatrone 44 aus Sintermetall untergebracht und mittels einer Verschlussschraube 45 gesichert. Das Rückschlagventil 4 hat im zusammengebauten Zustand den in Fig. 7 dargestellten Aufbau.

Das Gegenstück zum Rückschlagventil 4 bei den Anschlusssystemen aus Fig. 1 und 2 bildet das in Fig. 6 näher dargestellte Reduzierventil 2 mit dem unten eingeschraubten Gasentnahmekopf 52. Im oberen Teil des Reduzierventils 2 ist die Membran 48 untergebracht, welche den Druckraum 50 von der Umgebung trennt. Die Membran 48 ist in der Mitte beidseitig mit Auflagescheiben 47, 49 ausgerüstet. An der oberen Auflagescheibe 47 wird sie mit dem Druck einer Feder 46 beaufschlagt, der durch eine unter einer Abdeckkappe 55 verborgene Einstellschraube (in Fig. 6 nicht dargestellt) eingestellt werden kann. Mit der unteren Auflagescheibe 49 wirkt die Membran auf eine Stossstange 51, die in der Mittelachse durch das Reduzierventil 2 und den eingeschraubten Gasentnahmekopf 52 hindurch nach unten verläuft und dort so weit heraussteht, dass sie beim Anschliessen des Rückschlagventils 4 auf den Ventilstössel 38 in der oben beschriebenen Weise einwirken kann. Der Gasentnahmekopf 52 ist in seinem vorderen Bereich als zum Oeffnungskonus (30) passender und beim Verbinden von Rückschlagventil 4 und Reduzierventil 2 dichtend in den Oeffnungskonus einsitzender Steckkonus 54 ausgebildet. Die Aussenformen 53 (Fig. 6, 8), welche den Steckkonus 54 umgeben, passen zu den Innenformen 35 und bilden zusammen mit ihnen die Kodierungsmittel.

An der dem Manometer 8 gegenüberliegenden Seite des Reduzierventils 2 ist ein Gasentnahmeanschluss 60 angeordnet (der in den übrigen Darstellung der Einfachheit halber weggelassen ist), der ein mit einer Feder 61 vorgespanntes Leitungsrückschlagventil 62 enthält. Durch den Widerstand des Leitungsrückschlagventils 62 bleibt beim Entleeren der Druckgasflasche ein kleiner Restdruck in der Flasche zurück, was bei vielen Flaschen vom Hersteller gefordert wird. Das Leitungsrückschlagventil 62 verhindert das Zurückströmen von Gas, Luft oder Wasser in die Flasche, so dass eine Verunreinigung bzw. (im Falle von Wasser) eine Korrosion der Flasche sicher verhindert wird.

Die verschiedenen Phasen des eigentlichen Anschlussvorgangs bei einem Anschlusssystem gemäss dem in Fig. 1 dargestellten Ausführungsbeispiel sind in der Fig. 9 wiedergegeben. Zunächst sind die Druckgasflasche 5 und die Anschlussvorrichtung 2, 3 ohne jede mechanische Kopplung (Fig. 9(a)). Der Anschlussvorgang beginnt, indem die Flasche 5 mit dem einen Zapfenpaar 32 in die Einhängeöffnungen 58 in den Tragarmen 12 der Wandhalterung 3 eingehängt wird (Fig. 9(b)). Die Flasche nimmt im eingehängten Zustand eine sichere Ruhelage ein, in welche sich der Schwerpunkt der Flasche im Lot durch die Drehachse 34 im Zapfenpaar 32 befindet. Druckgasflasche 5 und Wandhalterung werden so miteinander mechanisch gekoppelt und bilden ein Schwenksystem mit der Schwenkachse 34.

Anschliessend kann die Druckgasflasche 5 durch leichten Druck in Richtung der Wand um die Schwenkachse 34 so weit verschwenkt werden, dass das andere Zapfenpaar 31 mit dem Klinkenhebel 14 in einen einrastenden Eingriff gelangt (Fig. 9(c)). Dies ist nur möglich, wenn Innenform 35 und Aussenform 53 der Kodierungsmittel übereinstimmen. Das Reduzierventil 2 ist mittels einer Feder 59, vorzugsweise in Form eines Satzes von Tellerfedern, zurückfedernd auf der Tragplatte zwischen den Tragarmen 12 montiert. Bei fertig eingehängter Flasche wird diese Feder 59 gegen deren Vorspannung leicht (um ca. 0,4 mm) zusammengedrückt. Dadurch ist gewährleistet, dass der Gasentnahmekopf 52 stets auf die Anschlagfläche auf der Anschlussplatte 27 gepresst wird. Wird eine falsch kodierte Flasche eingehängt, wird keines der Anschlussteile beschädigt: Da Aussenform 53 und Innenform 35 nicht ineinanderpassen, wird die Feder 59 lediglich stärker (um ca. 1,5 mm) zusammengedrückt. Die Länge der Stossstange 51 reicht dabei nicht mehr aus, um den Ventilstössel 38 des Rückschlagventils zu betätigen.

Sinkt der Flaschendruck einer angeschlossenen Druckgasflasche 5 ab auf das Niveau im Druckraum 50, wird die Membran 48 durch die Feder 46 nach unten gedrückt. Dadurch bewegt sich die Stossstange 51 nach unten und öffnet das Rückschlagventil 4 vollständig. Wie bereits oben erwähnt, bleibt wegen des Leitungsrückschlagventils 62 ein kleiner Restdruck in der Flasche zurück. Die Flasche kann nun zum Auswechseln durch Druck auf die Taste am Klinkenhebel 14 entriegelt werden. Sie hängt nach dem Entriegeln noch an dem rechten Zapfenpaar 32 in den hakenförmigen Einhängeöffnungen 58 der Tragarme 12. Sie kann dann ohne Kraftaufwand entnommen und gegen eine volle Flasche ausgetauscht werden.

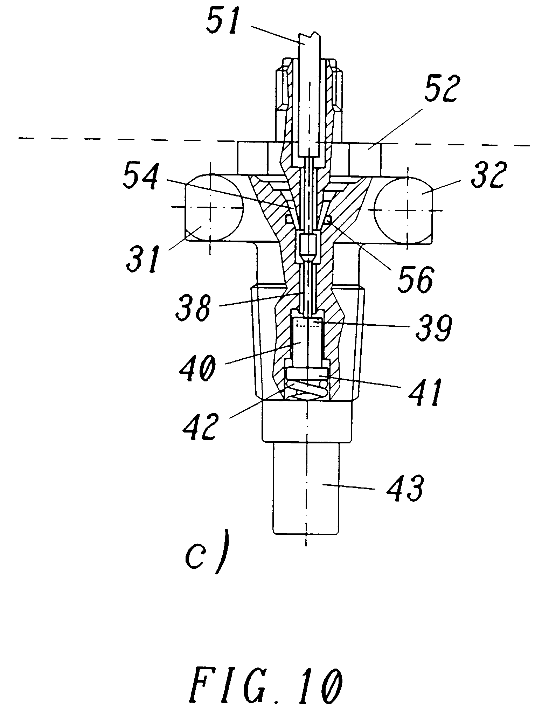

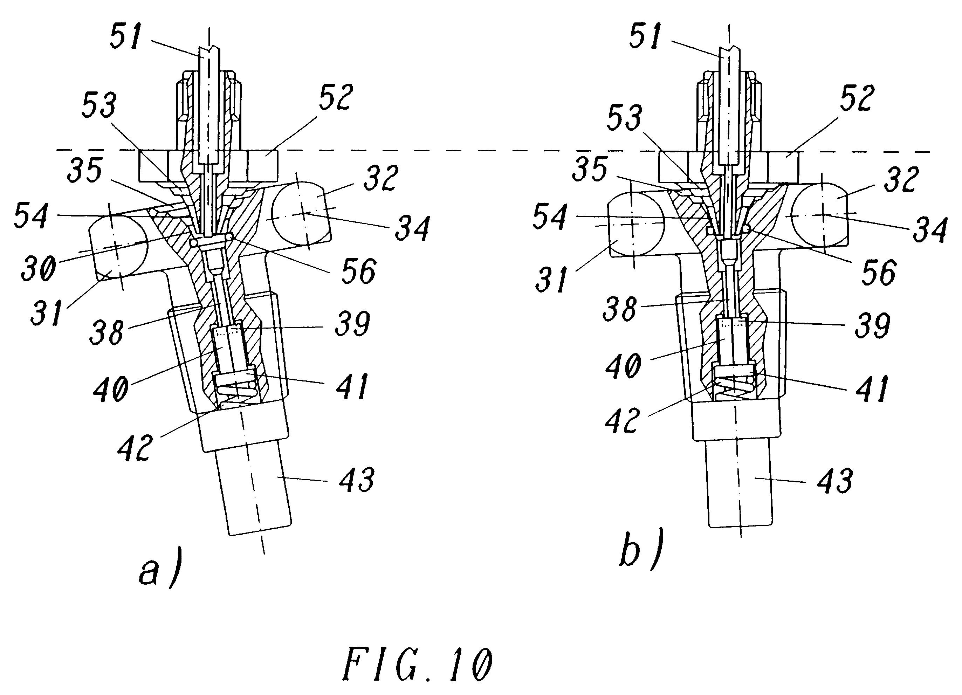

Das Zusammenspiel der inneren Teile des Rückschlagventils und des Gasentnahmekopfes 52 beim Anschliessen ist für verschiedene Anschlussphasen in Fig. 10 wiedergegeben. In Fig. 10(a) ist die (nicht dargestellte) Flasche mit dem Rückschlagventil bereits in die Halterung eingehängt und um die Schwenkachse 34 nach links verschwenkt. Sowohl die Kodierungsmittel 35, 53 als auch die Anschlussöffnung 30 und der Steckkonus 54 sowie die Stossstange 51 und der Ventilstössel 38 befinden sich noch nicht in Eingriff. Wird die Flasche weiter nach links verschwenkt (Fig. 10(b)), fährt der Steckkonus 54 in den Bereich des O-Rings 56 ein und dichtet die Verbindung nach aussen hin ab, ohne dass die Stossstange 51 auf den Ventilstössel 38 drückt und das Rückschlagventil bereits öffnet. Erst wenn die Verschwenkung bis zum Anschlag fortgesetzt wird (Fig. 10(c)), wird der Ventilstössel 38 durch die Stossstange 51 nach unten gedrückt und das Ventil an der Flasche geöffnet.

Vergleichbare Anschlussvorgänge ergeben sich, wenn anstelle der Wandhalterung 3 die mobile Halterung 20 eingesetzt wird.

Bei der Verwendung der Handbetätigungsvorrichtung 23 dagegen wird das Rückschlagventil 4 nicht automatisch geöffnet, sondern durch Betätigung der Spindel 25 nach dem Anschliessen.

Insgesamt ergibt sich mit der Erfindung ein Anschlusssystem, welches sich durch eine Vielzahl von Vorteilen auszeichnet:
- das System ermöglicht einen schnellen Flaschenwechsel ohne Einsatz von Werkzeug
- mit der Wandhalterung ist ein direkter Einbau in ein Gerät bzw. die Befestigung von Druckgasflaschen bis ca. 15 kg direkt an einer Wand möglich
- mit der mobilen Halterung können wahlweise frei stehende Flaschen angeschlossen werden
- es können wahlweise Wandhalterungen oder mobile Halterungen mit integriertem Reduzierventil als vorgesteuerte Anschlüsse oder ohne integriertes Reduzierventil mit bestehenden Druckreduzierventilen betrieben werden
- ein integriertes Leitungsrückschlagventil im Gasentnahmeanschluss verhindert das Zurückfliessen von Gas oder Flüssigkeiten (z.B. von Getränk bei der Getränkebereitung) und schützt so die Flasche vor Verschmutzung oder Korrosion
- das Leitungsrückschlagventil verhindert ein vollständiges Entleeren der Flasche
- integrierte Kodierungsmittel erlauben die Verwendung einer Vielzahl (mehr als 126) Codes, mit deren Hilfe verschiedene Gase vertauschsicher abgefüllt und verbraucht werden können
- durch die Kodierung können exklusive Anschlüsse realisiert sowie eine unbefugte Gasentnahme und -Befüllung verhindert werden
- die Druckgasflaschen lassen sich mittels des integrierten Rückschlagventils automatisch befüllen
- eine Bruchsicherung verhindert das Ausströmen von Gas, wenn das Oberteil des Rückschlagventils (die aus dem Flaschenhals ragende Partie) durch Sturz abgebrochen oder weggeschlagen wird.

### BEZEICHNUNGSLISTE

- 1,21: Anschlusssystem
- 2: Reduzierventil
- 3: Wandhalterung
- 4: Rückschlagventil
- 5: Druckgas flasche
- 6: Mittelachse
- 7: Ueberdruckventil
- 8: Manometer
- 9: Befestigungsplatte
- 10: Schwenkachse (Klinkenhebel)
- 11,16: Tragplatte
- 12: Tragarm
- 13: Feder
- 14: Klinkenhebel
- 15: Flaschenhals
- 17: Betätigungshebel
- 18: Rasthebel
- 19: Gabel
- 20: mobile Halterung
- 22,26: Anschlusssystem
- 23: Handbetätigungsvorrichtung
- 24: Anschluss
- 25: Spindel
- 27: Anschlussplatte
- 28: Einschraubkonus
- 29: Gewinde
- 30: Anschlussöffnung
- 31;31a,b: Zapfen
- 32;32a,b: Zapfen
- 33,34: Schwenkachse
- 35: Innenform (konkav verzahnt)
- 36: Dichtungsnut
- 37: Ventilsitz
- 38: Ventilstössel
- 39: Ventildichtung
- 40: Ventilkörper
- 41: Adapterstück
- 42: Ventilfeder
- 43: Filtergehäuse
- 44: Filterpatrone (Sintermetall)
- 45: Verschlussschraube
- 46: Feder
- 47,49: Auflagescheibe
- 48: Membran
- 50: Druckraum
- 51: Stossstange
- 52: Gasentnahmekopf
- 53: Aussenform (konvex verzahnt)
- 54: Steckkonus
- 55: Abdeckkappe
- 56: O-Ring
- 57: Einrastöffnung
- 58: Einhängeöffnung
- 59: Feder
- 60: Gasentnahmeanschluss
- 61: Feder
- 62: Leitungsrückschlagventil

## Patentansprüche

1. Anschlusssystem (1, 21, 22, 26) für eine Druckgasflasche (5), umfassend ein in einem Flaschenhals (15) der Druckgasflasche (5) angeordnetes Rückschlagventil (4), welches mit einer Anschlussöffnung (30) zur Gasentnahme ausgestattet ist und mittels eines entlang einer Mittelachse (6) verschiebbaren Ventilstössels (38) von aussen betätigbar ist, sowie eine Anschlussvorrichtung (2, 3, 20, 23), welche mit dem Rückschlagventil (4) lösbar einrastend und gasdicht verbindbar ist und Mittel zur Betätigung des Ventilstössels (38) enthält, dadurch gekennzeichnet, dass die Druckgasflasche (5) mit dem Rückschlagventil (4) und die Anschlussvorrichtung (2, 23) in einer gemeinsamen, quer zur Mittelachse (6) und ausserhalb der Mittelachse (6) angeordneten Schwenkachse (33, bzw. 34) mechanisch verkoppelbar und im verkoppelten Zustand durch ein Verschwenken relativ zueinander um die Schwenkachse (33 bzw. 34) verbindbar sind.

2. Anschlusssystem nach Anspruch 1, dadurch gekennzeichnet, dass das Rückschlagventil (4) einen zur Mittelachse (6) konzentrischen Einschraubkonus (28) umfasst und mittels eines auf dem Einschraubkonus (28) angeordneten konischen Gewindes (29) in den Flaschenhals (15) der Druckgasflasche (5) einschraubbar ist.

3. Anschlusssystem nach Anspruch 2, dadurch gekennzeichnet, dass am äusseren Ende des Einschraubkonus (28) eine im wesentlichen rechteckige, quer zur Mittelachse (6) liegende Anschlussplatte (27) angeformt ist, auf deren Oberseite die Anschlussöffnung (30) eingelassen ist, und dass die Schwenkachse (33 bzw. 34) durch ein Paar Zapfen (31a,b bzw. 32a,b) bestimmt wird, welche an zwei gegenüberliegenden Seiten der Anschlussplatte (27) angeformt sind.

4. Anschlusssystem nach Anspruch 3, dadurch gekennzeichnet, dass an der Anschlussplatte zwei Paare von Zapfen (31a,b; 32a,b) angeformt sind, welche zwei wahlweise benutzbare Schwenkachsen (33, 34) bestimmen, die symmetrisch zu einer durch die Mittelachse (6) gehenden Mittelebene angeordnet sind.

5. Anschlusssystem nach Anspruch 1, dadurch gekennzeichnet, dass die Anschlussöffnung (30) als sich nach aussen öffnender, zur Mittelachse (6) konzentrischer Konus ausgebildet ist, dass in der Wand des Oeffnungskonus ein konzentrisch umlaufender Dichtungsring (56) eingelassen ist, und dass die Anschlussvorrichtung (2, 3, 20, 23) einen Gasentnahmekopf (52) umfasst, welcher in seinem vorderen Bereich als zum Oeffnungskonus passender und beim Verbinden von Rückschlagventil (4) und Anschlussvorrichtung (2, 3, 20, 23) dichtend in den Oeffnungskonus einsitzender Steckkonus (54) ausgebildet ist.

6. Anschlusssystem nach Anspruch 5, dadurch gekennzeichnet, dass am Rückschlagventil (4) und an der Anschlussvorrichtung (2, 3, 20, 23) Kodierungsmittel (35, 53) angeordnet sind, welche ein ordnungsgemässes Verbinden von Druckgasflasche (5) und Anschlussvorrichtung (2, 3, 20, 23) nur für zur Anschlussvorrichtung passende Druckgasflaschen zulassen.

7. Anschlusssystem nach Anspruch 6, dadurch gekennzeichnet, dass die Kodierungsmittel eine konzentrisch zur Mittelachse (6) im Bereich der Anschlussöffnung (30) angeordnete, konkav verzahnte Innenform (35) und eine dazu passende, im Bereich des Gasentnahmekopfes (52) angeordnete konvex verzahnte Aussenform (53) umfassen.

8. Anschlusssystem nach Anspruch 1, dadurch gekennzeichnet, dass die Anschlussvorrichtung ein Reduzierventil (2) mit einer federbelasteten Membran (48) umfasst, und dass die Mittel zur Betätigung des Ventilstössels (38) eine von der Membran (48) beaufschlagte Stossstange (51) umfassen, welche beim Verbinden von Rückschlagventil (4) und Anschlussvorrichtung auf den Ventilstössel (38) einwirkt.

9. Anschlusssystem nach Anspruch 1, dadurch gekennzeichnet, dass die Anschlussvorrichtung als Handbetätigungsvorrichtung (23) zum Oeffnen des Rückschlagventils (4) ausgebildet ist.

10. Anschlusssystem nach Anspruch 9, dadurch gekennzeichnet, dass die Mittel zur Betätigung des Ventilstössels (38) eine Spindel (25) umfassen.

11. Anschlusssystem nach einem der Ansprüche 8 bis 10, dadurch gekennzeichnet, dass die Anschlussvorrichtung eine fest montierbare Wandhalterung (3) zur Aufnahme der mit dem Rückschlagventil (4) ausgerüsteten Druckgasflasche (5) umfasst, an welcher das Reduzierventil (2) bzw. die Handbetätigungsvorrichtung (23) zurückfedernd (59) befestigt ist.

12. Anschlusssystem nach Anspruch 11, dadurch gekennzeichnet, dass das Rückschlagventil (4) einen zur Mittelachse (6) konzentrischen Einschraubkonus (28) umfasst und mittels eines auf dem Einschraubkonus (28) angeordneten konischen Gewindes (29) in den Flaschenhals (15) der Druckgasflasche (5) einschraubbar ist, dass am äusseren Ende des Einschraubkonus (28) eine im wesentlichen rechteckige, quer zur Mittelachse (6) liegende Anschlussplatte (27) angeformt ist, auf deren Oberseite die Anschlussöffnung (30) eingelassen ist, dass die Schwenkachse (33 bzw. 34) durch ein Paar Zapfen (31a,b bzw. 32a,b) bestimmt wird, welche an zwei gegenüberliegenden Seiten der Anschlussplatte (27) angeformt sind, dass die Wandhalterung (3) zwei parallele Tragarme (12) umfasst, welche an ihrem freien Ende Einhängeöffnungen (58) aufweisen, in welche Einhängeöffnungen (58) die Anschlussplatte (27) mit ihren Zapfen (31a,b bzw. 32a,b) einhängbar ist, und in welchen Einhängeöffnungen (58) die Anschlussplatte (27) um die durch die Zapfen (31a,b bzw. 32a,b) bestimmte Schwenkachse (33 bzw. 34) verschwenkbar ist.

13. Anschlusssystem nach Anspruch 12, dadurch gekennzeichnet, dass an der Anschlussplatte zwei Paare von Zapfen (31a,b; 32a,b) angeformt sind, welche zwei wahlweise benutzbare Schwenkachsen (33, 34) bestimmen, die symmetrisch zu einer durch die Mittelachse (6) gehenden Mittelebene angeordnet sind, und dass an der Befestigungsseite der Tragarme (12) Einrastöffnungen (57) vorgesehen sind, in welche das nicht zum Verschwenken verwendete Paar von Zapfen (32a,b bzw. 31a,b) beim Verbinden einschwenkt und einrastend gehaltert wird.

14. Anschlusssystem nach Anspruch 13, dadurch gekennzeichnet, dass zur Verrastung ein Klinkenhebel (14) vorgesehen ist, welcher um eine Schwenkachse (10) schwenkbar an der Wandhalterung (3) gelagert ist.

15. Anschlusssystem nach einem der Ansprüche 8 bis 10, dadurch gekennzeichnet, dass die Anschlussvorrichtung eine mobile Halterung (20) umfasst, an welcher das Reduzierventil (2) bzw. die Handbetätigungsvorrichtung (23) zurückfedernd (59) befestigt ist, und welche auf die mit dem Rückschlagventil (4) ausgerüstete Druckgasflasche (5) aufsetzbar ist.

16. Anschlusssystem nach Anspruch 15, dadurch gekennzeichnet, dass das Rückschlagventil (4) einen zur Mittelachse (6) konzentrischen Einschraubkonus (28) umfasst und mittels eines auf dem Einschraubkonus (28) angeordneten konischen Gewindes (29) in den Flaschenhals (15) der Druckgasflasche (5) einschraubbar ist, dass am äusseren Ende des Einschraubkonus (28) eine im wesentlichen rechteckige, quer zur Mittelachse (6) liegende Anschlussplatte (27) angeformt ist, auf deren Oberseite die Anschlussöffnung (30) eingelassen ist, dass die Schwenkachse (33 bzw. 34) durch ein Paar Zapfen (31a,b bzw. 32a,b) bestimmt wird, welche an zwei gegenüberliegenden Seiten der Anschlussplatte (27) angeformt sind, dass die mobile Halterung (20) zwei parallele Gabeln (19) umfasst, mit welchen die mobile Halterung (20) auf die Anschlussplatte (27) mit ihren Zapfen (31a,b bzw. 32a,b) aufsteckbar ist, und in welchen die mobile Halterung (20) um die durch die Zapfen (31a,b bzw. 32a,b) bestimmte Schwenkachse (33 bzw. 34) verschwenkbar ist.

17. Anschlusssystem nach Anspruch 16, dadurch gekennzeichnet, dass an der Anschlussplatte zwei Paare von Zapfen (31a,b; 32a,b) angeformt sind, welche zwei wahlweise benutzbare Schwenkachsen (33, 34) bestimmen, die symmetrisch zu einer durch die Mittelachse (6) gehenden Mittelebene angeordnet sind, und dass an der den Gabeln (19) gegenüberliegenden Seite Einrastmittel (17, 18) vorgesehen sind, welche beim Verbinden über das nicht zum Verschwenken verwendete Paar von Zapfen (32a,b bzw. 31a,b) schwenken und einrasten.

18. Anschlusssystem nach Anspruch 2, dadurch gekennzeichnet, dass der Ventilstössel (38) von oben in den Bereich des konischen Gewindes (29) hineinreicht.

19. Anschlusssystem nach einem der Ansprüche 1 bis 18, dadurch gekennzeichnet, dass an der Anschlussvorrichtung (2, 3, 20, 23) ein Gasentnahmeanschluss (60) vorgesehen ist, welcher ein Leitungsrückschlagventil (62) enthält.

## Revendications

1. Système de raccordement (1, 21, 22, 26) pour une bouteille de gaz sous pression (5), comprenant un clapet anti-retour (4) disposé dans un col (15) de la bouteille de gaz sous pression (5), qui est équipé d'une ouverture de raccordement (30) pour le prélèvement de gaz et qui peut être actionné de l'extérieur au moyen d'un poussoir de soupape (38) déplaçable le long d'un axe central (6), ainsi qu'un dispositif de raccordement (2, 3, 20, 23), qui peut être assemblé au clapet anti-retour (4) de façon séparable par verrouillage et de façon étanche au gaz et qui comporte des moyens pour actionner le poussoir de soupape (38), caractérisé en ce que la bouteille de gaz sous pression (5) avec le clapet anti-retour (4) et le dispositif de raccordement (2, 23) peuvent être couplés mécaniquement suivant un axe de basculement commun (33, respectivement 34) disposé transversalement à l'axe central (6) et à l'extérieur de l'axe central (6), et peuvent être assemblés, à l'état couplé, par un basculement l'un par rapport à l'autre autour de l'axe de basculement (33, respectivement 34).

2. Système de raccordement suivant la revendication 1, caractérisé en ce que le clapet anti-retour (4) comprend un cône de vissage (28) concentrique à l'axe central (6) et peut être vissé dans le col (15) de la bouteille de gaz sous pression (5) au moyen d'un filet conique (29) formé sur le cône de vissage (28).

3. Système de raccordement suivant la revendication 2, caractérisé en ce qu'à l'extrémité extérieure du cône de vissage (28) est formé un plateau de raccordement (27), de forme essentiellement rectangulaire et placé transversalement à l'axe central (6), dans la face supérieure duquel est ménagée l'ouverture de raccordement (30), et en ce que l'axe de basculement (33, respectivement 34) est déterminé par une paire de tourillons (31a, b, respectivement 32a, b), qui sont formés sur deux côtés opposés du plateau de raccordement (27).

4. Système de raccordement suivant la revendication 3, caractérisé en ce que, sur le plateau de raccordement, sont formées deux paires de tourillons (31a, b; 32a, b), qui déterminent deux axes de basculement (33, 34) utilisables au choix, qui sont disposés symétriquement par rapport à un plan central passant par l'axe central (6).

5. Système de raccordement suivant la revendication 1, caractérisé en ce que l'ouverture de raccordement (30) est constituée par un cône concentrique à l'axe central (6) et s'ouvrant vers l'extérieur, en ce qu'un joint torique (56) l'entourant concentriquement est inséré dans la paroi du cône d'ouverture, et en ce que le dispositif de raccordement (2, 3, 20, 23) comprend une tête de prélèvement de gaz (52), qui est constituée dans sa partie avant par un cône mâle (54) s'adaptant au cône d'ouverture et se logeant de façon étanche dans le cône d'ouverture lors de l'assemblage du clapet anti-retour (4) et du dispositif de raccordement (2, 3, 20, 23).

6. Système de raccordement suivant la revendication 5, caractérisé en ce que le clapet anti-retour (4) et le dispositif de raccordement (2, 3, 20, 23) portent des moyens de codage (35, 53), qui ne permettent un assemblage régulier de la bouteille de gaz sous pression (5) et du dispositif de raccordement (2, 3, 20, 23) que pour des bouteilles de gaz sous pression s'adaptant au dispositif de raccordement.

7. Système de raccordement suivant la revendication 6, caractérisé en ce que les moyens de codage comprennent une forme intérieure (35) à denture concave, disposée concentriquement à l'axe central (6) dans la région de l'ouverture de raccordement (30), et une forme extérieure (53) à denture convexe, s'adaptant à celle-ci et disposée dans la région de la tête de prélèvement de gaz (52).

8. Système de raccordement suivant la revendication 1, caractérisé en ce que le dispositif de raccordement comprend un détendeur (2) avec une membrane à ressort (48), et en ce que les moyens pour actionner le poussoir de soupape (38) comprennent une tige de poussoir (51) manoeuvrée par la membrane (48), et qui agit sur le poussoir de soupape (38) lors de l'assemblage du clapet anti-retour (4) et du dispositif de raccordement.

9. Système de raccordement suivant la revendication 1, caractérisé en ce que le dispositif de raccordement est constitué par un dispositif d'actionnement manuel (23) pour l'ouverture du clapet anti-retour (4).

10. Système de raccordement suivant la revendication 9, caractérisé en ce que les moyens pour actionner le poussoir de soupape (38) comprennent une broche (25).

11. Système de raccordement suivant l'une quelconque des revendications 8 à 10, caractérisé en ce que le dispositif de raccordement comprend un support mural (3) à monter fixement pour recevoir la bouteille de gaz sous pression (5) équipée du clapet anti-retour (4), et auquel est fixé, avec un effet de ressort (59), le détendeur (2), respectivement le dispositif d'actionnement manuel (23).

12. Système de raccordement suivant la revendication 11, caractérisé en ce que le clapet anti-retour (4) comprend un cône de vissage (28) concentrique à l'axe central (6) et peut être vissé dans le col (15) de la bouteille de gaz sous pression (5) au moyen d'un filet conique (29) formé sur le cône de vissage (28), en ce qu'à l'extrémité extérieure du cône de vissage (28) est formé un plateau de raccordement (27) de forme essentiellement rectangulaire et placé transversalement à l'axe central (6), dans la face supérieure duquel est ménagée l'ouverture de raccordement (30), en ce que l'axe de basculement (33, respectivement 34) est déterminé par une paire de tourillons (31a, b, respectivement 32a, b), qui sont formés sur deux côtés opposés du plateau de raccordement (27), en ce que le support mural (3) comporte deux bras porteurs parallèles (12), qui présentent à leur extrémité libre des ouvertures de suspension (58), ouvertures de suspension (58) dans lesquelles le plateau de raccordement (27) peut être suspendu par ses tourillons (31a, b, respectivement 32a, b) et ouvertures de suspension (58) dans lesquelles le plateau de raccordement (27) peut basculer autour de l'axe de basculement (33, respectivement 34) déterminé par les tourillons (31a, b, respectivement 32a, b).

13. Système de raccordement suivant la revendication 12, caractérisé en ce que, sur le plateau de raccordement sont formées deux paires de tourillons (31a, b; 32a, b), qui déterminent deux axes de basculement (33, 34) utilisables au choix, qui sont disposés symétriquement par rapport à un plan central passant par l'axe central (6), et en ce qu'il est prévu, sur le côté de fixation des bras porteurs (12), des ouvertures de verrouillage (57) dans lesquelles la paire de tourillons (32a, b, respectivement 31a, b) non utilisée pour le basculement vient s'engager en basculant lors de l'assemblage et est maintenue en position verrouillée.

14. Système de raccordement suivant la revendication 13, caractérisé en ce qu'il est prévu, pour le verrouillage, un levier à cliquet (14), qui est supporté dans le support mural (3) de façon à pouvoir basculer autour d'un axe de basculement (10).

15. Système de raccordement suivant l'une quelconque des revendications 8 à 10, caractérisé en ce que le dispositif de raccordement comprend un support mobile (20), auquel est fixé, avec un effet de ressort (59), le détendeur (2), respectivement le dispositif d'actionnement manuel (23), et qui peut être posé sur la bouteille de gaz sous pression (5) équipée du clapet anti-retour (4).

16. Système de raccordement suivant la revendication 15, caractérisé en ce que le clapet anti-retour (4) comprend un cône de vissage (28) concentrique à l'axe central (6) et peut être vissé dans le col (15) de la bouteille de gaz sous pression (5) au moyen d'un filet conique (29) formé sur le cône de vissage (28), en ce qu'à l'extrémité extérieure du cône de vissage (28) est formé un plateau de raccordement (27) de forme essentiellement rectangulaire et placé transversalement à l'axe central (6), dans la face supérieure duquel est ménagée l'ouverture de raccordement (30), en ce que l'axe de basculement (33, respectivement 34) est déterminé par une paire de tourillons (31a, b, respectivement 32a, b), qui sont formés sur deux côtés opposés du plateau de raccordement (27), en ce que le support mobile (20) comporte deux fourches parallèles (19), avec lesquelles le support mobile (20) peut être engagé sur le plateau de raccordement (27) avec ses tourillons (31a, b, respectivement 32a, b), et dans lesquelles le support mobile (20) peut basculer autour de l'axe de basculement (33, respectivement 34) déterminé par les tourillons (31a, b, respectivement 32a, b).

17. Système de raccordement suivant la revendication 16, caractérisé en ce que, sur le plateau de raccordement (27), sont formées deux paires de tourillons (31a, b; 32a, b), qui déterminent deux axes de basculement (33, 34) utilisables au choix, qui sont disposés symétriquement par rapport à un plan central passant par l'axe central (6), et en ce qu'il est prévu, sur le côté faisant face aux fourches (19), des moyens de verrouillage (17, 18) qui, lors de l'assemblage, basculent et se verrouillent sur la paire de tourillons (32a, b, respectivement 31a, b) non utilisée pour le basculement.

18. Système de raccordement suivant la revendication 2, caractérisé en ce que le poussoir de soupape (38) pénètre par le haut dans la région du filet conique (29).

19. Système de raccordement suivant l'une quelconque des revendications 1 à 18, caractérisé en ce qu'il est prévu, sur le dispositif de raccordement (2, 3, 20, 23), un raccord de prélèvement de gaz (60), qui comporte un clapet anti-retour de conduite (62).

## Claims

1. Connection system (1, 21, 22, 26) for a pressure cylinder (5), comprising a check valve (4) located in a neck (15) of the pressure cylinder (5) and which is equipped with a connection opening (30) for gas removal and is operable from the outside by means of a valve tappet (38) displaceable along a central axis (6), as well as a connecting device (2, 3, 20, 23), which is connectable in gastight, detachably locking manner with the check valve (4) and contains means for operating the valve tappet (38), characterized in that the pressure cylinder (5) with the check valve (4) and the connecting device (2, 23) can be mechanically coupled in a common pivoting axis (33, or 34) at right angles to and outside the central axis (6) and are connectable in the coupled state by a pivoting relative to one another about the pivoting axis (33 or 34).

2. Connection system according to claim 1, characterized in that the check valve (4) comprises a screw-in cone (28) concentric to the central axis (6) and can be screwed by means of a conical thread (29) on the screw-in cone (28) into the neck (15) of the pressure cylinder (5).

3. Connection system according to claim 2, characterized in that onto the outer end of the screw-in cone (28) is shaped a substantially rectangular connection plate (27) at right angles to the central axis (6) and on whose top is provided the connection opening (30) and that the pivoting axis (33 or 34) is defined by a pair of spigots (31a, b or 32a, b), which are shaped on two opposite sides of the connection plate (27).

4. Connection system according to claim 3, characterized in that on the connection plate are shaped two pairs of spigots (31a, b; 32a, b), which define two arbitrarily usable pivoting axes (33, 34), which are arranged symmetrically to a median plane passing through the central axis (6).

5. Connection system according to claim 1, characterized in that the connection opening (30) is constructed as an outwardly opening cone concentric to the central axis (6), that in the wall of the opening cone is provided a concentrically passing round packing ring (56) and that the connecting device (2, 3, 20, 23) comprises a gas removal head, which in its front region is constructed as a plug cone (54) matching the opening cone and on connecting the check valve (4) and connecting device (2, 3, 20, 23) sealingly fits in the opening cone.

6. Connection system according to claim 5, characterized in that on the check valve (4) and on the connecting device (2, 3, 20, 23) are provided coding means (35, 53) allowing a correct connection of pressure cylinder (5) and connecting device (2, 3, 20, 23) only for pressure cylinders matching the connecting device.

7. Connection system according to claim 6, characterized in that the coding means comprise a concavely toothed internal shape (35) positioned concentrically to the central axis (6) in the vicinity of the connection opening (30) and a matching, convexly toothed external shape (53) located in the vicinity of the gas removal head (52).

8. Connection system according to claim 1, characterized in that the connecting device comprises a reducing valve (2) with a spring-loaded diaphragm (48) and that the means for operating the valve tappet (38) comprise a push rod (51) subject to the action of the diaphragm (48) and which acts on the valve tappet (38) on connecting the check valve (4) and connecting device.

9. Connection system according to claim 1, characterized in that the connecting device is constructed as a manual operating device (23) for opening the check valve (4).

10. Connection system according to claim 9, characterized in that the means for operating the valve tappet (38) comprise a spindle (25).

11. Connection system according to one of the claims 8 to 10, characterized in that the connecting device comprises a fixed installable wall mounting (3) for receiving a pressure cylinder (5) equipped with the check valve (4) and to which is resiliently fixed (59) the reducing valve (2) or manual operating device (23).

12. Connection system according to claim 11, characterized in that the check valve (4) comprises a screw-in cone (28) concentric to the central axis (6) and by means of a conical thread (29) located on the screw-in cone (28) can be screwed into the neck (15) of the pressure cylinder (5), that on the outer end of the screw-in cone (28) is shaped a substantially rectangular connection plate (27) at right angles to the central axis (6) and on whose top is provided the connection opening (30), that the pivoting axis (33 or 34) is defined by a pair of spigots (31a, b or 32a, b), which are shaped on two opposite sides of the connection plate (27), that the wall mounting (3) comprises two parallel support arms (12), which have on their free ends hang-in openings (58), into which can be hung the connection plate (27) by its spigots (31a, b or 32a, b) and in which the connection plate (27) can be pivoted about the pivoting axis (33 or 34) defined by the spigots (31a, b or 32a, b).

13. Connection system according to claim 12, characterized in that on the connection plate are shaped two pairs of spigots (31a,b or 32a,b), which define two randomly usable pivoting axes (33, 34) positioned symmetrically to a median plane passing through the central axis (6) and that on the fastening side of the support arms (12) are provided locking openings (57), in which, on connection, pivot and are lockingly held the pair of spigots (32a,b or 31a,b) not used for pivoting.

14. Connection system according to claim 13, characterized in that for locking purposes a ratchet lever (14) is provided, which is pivotably mounted about a pivoting axis (10) on the wall mounting (3).

15. Connection system according to one of the claims 8 to 10, characterized in that the connecting device comprises a mobile mounting (20), on which is resiliently fixed (59) the reducing valve (2) or manual operating device (23) and which can be slipped on the pressure cylinder (5) equipped with the check valve (4).

16. Connection system according to claim 15, characterized in that the check valve (4) comprises a screw-in cone (28) concentric to the central axis (6) and which can be screwed into the neck (15) of the pressure cylinder (5) by a conical thread (29) located on the screw-in cone (28), that on the outer end of the screw-in cone (28) is shaped a substantially rectangular connection plate (27) at right angles to the central axis (6) and on whose top is provided the connection opening (30), that the pivoting axis (33 or 34) is defined by a pair of spigots (31a,b or 32a, b), which are shaped on two opposite sides of the connection plate (27), that the mobile mounting (20) comprises two parallel forks (19) with which the mobile mounting (20) can be engaged on the connection plate (27) with the spigots (31a,b or 32a,b) and in which the mobile mounting (20) is pivotable about the pivoting axis (33 or 34) defined by the spigots (31a,b or 32a,b).

17. Connection system according to claim 16, characterized in that on the connection plate are shaped two pairs of spigots (31a,b, 32a,b), which define two randomly usable pivoting axes (33, 34), which are located symmetrically to a median plane passing through the central axis (6) and that on the side opposite to the forks (19) are provided locking means (17, 18), which on connection pivot and lock by means of the pair of spigots (32a,b or 31a,b) not used for pivoting.

18. Connection system according to claim 2, characterized in that the valve tappet (38) extends from above into the vicinity of the conical thread (29).

19. Connection system according to one of the claims 1 to 18, characterized in that on the connecting device (2, 3, 20, 23) is provided a gas removal connection (60), which contains a line check valve (62).
